# EUROPEAN PATENT SPECIFICATION

(11) **EP 4 586 593 B1**
(45) Date of publication and mention of the grant of the patent: **28.10.2026**
(21) Application number: 25179463.2
(22) Date of filing: 06.07.2012
(51) Int. Cl.: G06F 1/16, G09F 9/30, H04M 1/02

(54) **FLEXIBLE DISPLAY WITH DISPLAY SUPPORT**
FLEXIBLE ANZEIGE MIT ANZEIGETRÄGER
AFFICHAGE FLEXIBLE COMPORTANT UN SUPPORT D'AFFICHAGE

(30) Priority: 11.07.2011 US 201161506180 P
(43) Date of publication of application: 16.07.2025
(62) Document number(s) of the earlier application(s) in accordance with Art. 76 EPC: 18192602.3 / 3 428 774; 12175273.7 / 2 546 720
(73) Proprietor: Samsung Electronics Co., Ltd., Suwon-si, Gyeonggi-do 16677 (KR)
(72) Inventor: VERSCHOOR, Volker Barnhart, 5616 LZ Eindhoven (NL); VAN DIJK, Robert Sjang Josine, 5616 LZ Eindhoven (NL); WALTERS, Michael Johannes Anna Maria, 5616 LZ Eindhoven (NL); VAN DEN TILLAAR, Johannes Hermanus, 5616 LZ Eindhoven (NL); HAMERS, Johannes Cornelis Adriaan, 5616 LZ Eindhoven (NL); VAN LIESHOUT, Petrus Johannes Gerardus, 5616 LZ Eindhoven (NL)
(74) Representative: HGF

(56) References cited:
- US-A1- 2011 043 976
- US-A1- 2011 140 995
- US-A1- 2011 148 797
- US-B1- 6 377 324

## Description

### Field of invention

The present invention generally relates to flexible displays. The present invention specifically relates to flexible displays provided with display supports.

### Description of prior art

Flexible and especially rollable displays are manufactured on an organic substrate and are very thin. This makes it possible to repeatedly bend them with a small radius, a requirement for a rollable display. The advantages of a rollable display are the small volume needed for storing in the closed position and the lack of glass making the display unbreakable and of light weight.

A number of product concepts have been developed for flexible displays. The present invention focuses on the 'book' and the 'wrap' concept. A 'wrap' concept is shown in WO 2008/054206 A2.

The 'book' concept is the simplest implementation of a rollable display comprising two hingeably connected support halves with a continuous display. In the middle near the hinge mechanism is a hollow space to accommodate the curved segment of the display in the situation where the 'book' is in the closed position. The display size is at most twice the size of the closed display system. In practice, it will be around 1.8x the size due to the bezel of the support halves needed around the display.

The 'wrap' concept comprises a display, wrapped with its front side to a device body. Thus the display is protected when the 'wrap' is in the closed position. The display is supported with flat covers and hinge covers. The display currently makes by hinging of the covers one complete turn around the device body when wrapped. Therefore, the size of the display will be about twice the size of the device. For larger displays compared to the device body more turns are required, which adds mechanical complexity.

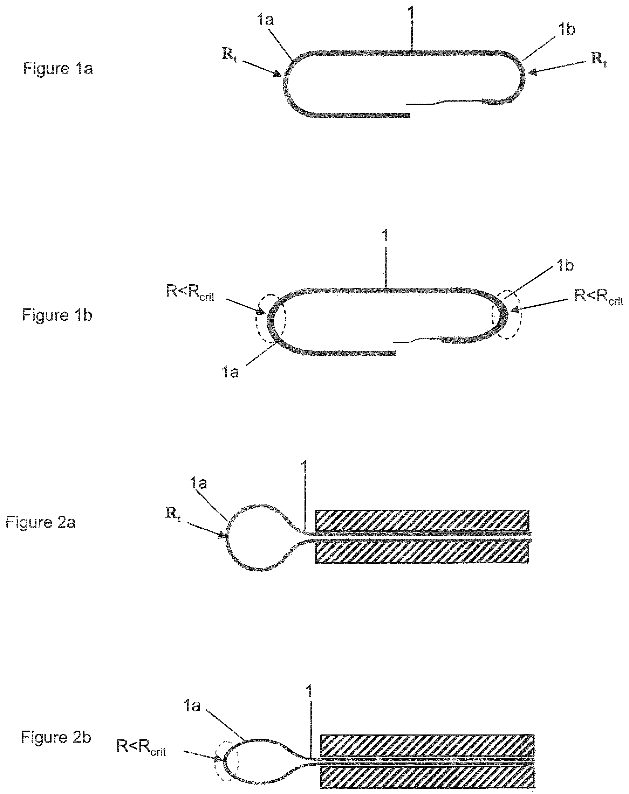

There are a lot of possibilities to realize the movement of the display with respect to the display system, but most of them result in unsupported parts of the display. In the conventional 'book' and 'wrap' concepts there are hinge areas where a segment of the display is unsupported. In fig. 1 and 2 for both concepts is shown the theoretical shape (fig.1a and 2a) and the actual shape (fig. 1b and 2b) which a display 1 tends to take in the closed position. The theoretically ideal shape of display segments 1a, 1b would have a perfect circular radius Rₜ, perhaps only varying in direction (+Rₜ or -Rt) but not in magnitude. However in practice in the known art the display 1 tends to take on with its segments 1a, 1b an ellipse like shape. The display 1 in a closed position as shown in figure 2b will encounter forces that will 'push' the segment 1a into a more elliptical shape. See the location in a circle in figures 1b and 2b for the difference with fig. 1a and 2a respectively. These actual shapes will have a varying radius in the unsupported segments 1a, 1b which at some point(s) will be smaller than the theoretical radius and with a minimal radius at a certain point (Rₘᵢₙ < Rt).

One reason that the display segment 1a, 1b will not take on the theoretical circular shape when in closed (rolled or wrapped) position is that the flexible display 1 is a stack consisting of a number of layers with varying mechanical properties. Another reason is that even in a mono-layer display (which is by definition impossible) internal tensions caused by the thickness and opposing forces of the material will cause a non-uniform radius in the display.

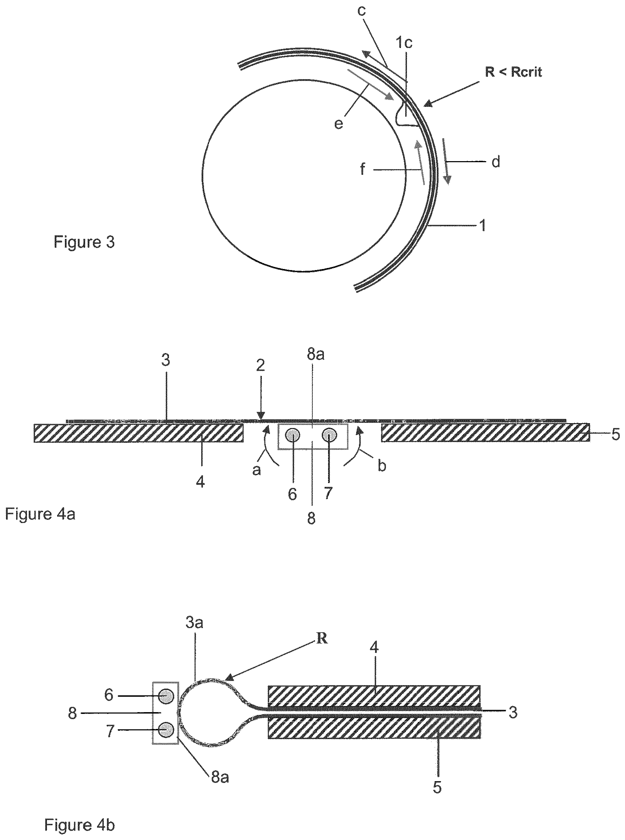

As mentioned before this deviance from the ideal circular shape results locally in smaller radii than specified for a flexible display. Test with flexible displays in a conventional 'book' concept showed that after some time opening and closing and also after lifetime accelerating tests, buckles appeared in the display. This buckle in the flexible display causes a failure of the display. Fig.3 shows the cross section of a flexible display 1 that has been curved to a circle. The layers of the display that are on the inside of the curve will be under compressive strain (arrows e and f) whereas the layers on the outside of the display will be under tensile strain (arrows c and d). Due to the compressive strain, the layers at the inside of the curve might form a buckle (see 1c) leading to display failure. On the other hand, the tensile strain in the layers on the outside of the curve can lead to cracks in these layers leading to display failure or a sharply reduced lifetime (in case a water barrier cracks). To avoid the above mentioned damage mechanisms, the radius with which the display can be curved must exceed a certain critical value R_{crit} (which is the smallest radius at which no damage occurs). In practice the specified value will be in a range between 4 and 7.5 mm.

In practice the unsupported part of a flexible display will not generally take a circular shape. However, locally, at each point a radius can be defined (the radius of the osculating circle), which is a measure for the curvature of the flexible display at that point. The radius at each point along the display contour must exceed the critical value R_{crit} to avoid damage.

US 6377324 B1 is a prior art document disclosing a flexible display device, bendable at a central region in the closed configuration. The device comprises two housing parts connected to each other via a hinge. The device can be in an open configuration, in which the flexible display is flat, and in a closed configuration, in which the flexible display is bent at a central area. The device discloses two clearance grooves for receiving a bend in the flexible display in the closed configuration.

It is an object of the invention to prevent a too small radius in the unsupported area of the display when the display is in the storage position. It is also an object to improve the lifetime of the display system.

### Disclosure of the invention

According to one aspect the invention provides a display system comprising a continuous flexible display, a support frame comprising two main display supports being hingeable with respect to each other and each structurally configured to support a respective portion of the flexible display, a segment of the flexible display being located between the said respective display portions, wherein the two main display supports are hingeable between a closed configuration for fixing the flexible display in a storage position and an open configuration for fixing the flexible display in an open position, in the storage position of the flexible display between the main display supports there is a free space enabling a partial curvature of said display segment without conflicting with the respective main display support and wherein at least one additional display support is configured to support substantially said segment of the flexible display in the storage position of the flexible display, the additional display support facilitates the curvature of the display segment with a predefined curvature having a radius which over the area of the curvature is larger than the critical radius R_{crit} for the flexible display.

The invention focuses in the different embodiments on the support of the display segment in parts of the construction where the display segment cannot be connected to a rigid support. This can be the case near hinges, guiding mechanisms and other mechanical elements that facilitate the movement of the display and supporting frame between a closed storage and an open position. The invention provides technical solutions to constrain the display segment in order to prevent a radius which is too small and which can lead to damage during lifetime of the display system.

The advantages of the different embodiments are that the predefined curvature of the display segment in the closed position is advantageous for the lifetime of the display.

### Brief description of the drawings

Fig.1 shows a schematic side view of part of a 'wrap' concept in a storage position shown with a theoretical display shape (fig.1A) and an actual display shape (fig. 1B), respectively;
Fig.2 shows a schematic side view of part of a 'book' concept in a storage position shown with a theoretical display shape (fig.2A) and an actual display shape (fig.2B), respectively;
Fig.3 shows a schematic side view of the display segment of the display shown in fig.1 or 2 with a local buckle in the display caused by radius smaller than the critical radius in the display;
Fig.4 shows a schematic side view of a 'book' embodiment in an open position (fig.4A) and a storage position (fig.4B), respectively, provided with an additional display support in accordance with the invention, fig.4C shows a perspective view of this 'book' embodiment in an open position without the display but with an additional display support in accordance with the invention, fig.4D shows in side view four different shapes of the additional display support;
Fig.5 shows a schematic side view of a 'wrap' embodiment in a storage position in accordance with the invention;
Fig.6 shows a schematic side view of part of the display with an additional display support in accordance with the invention in a 'book' or 'wrap' embodiment in a storage position provided with an extra layer or component, in fig.6A, 6B and 6C adhered to the backside of the display, in fig.6D applied on the front-side of the display, in accordance with the invention;
Fig.7 shows a schematic side view of another 'book' embodiment in a storage position with display supports with one and two hinges respectively in a symmetrical (fig.7A) and an asymmetrical (fig.7B) version in accordance with the invention;
Fig.8 shows a schematic side view of a part of another 'book' embodiment in a storage position (fig.8A), and open position (fig.8B), respectively, in accordance with the invention;
Fig.9 shows a schematic side view of another 'book' embodiment in a storage position (fig.9A), a partial open position (fig.9B) and open position (fig.9C), respectively, in accordance with the invention;
Fig.10 shows a schematic side view of a part of still another 'book' or 'wrap' embodiment in a storage position (fig.10A) and open position (fig.10B), as well as the positioning of the additional display support (fig.10C), respectively, in accordance with the invention.

### Description of the embodiments

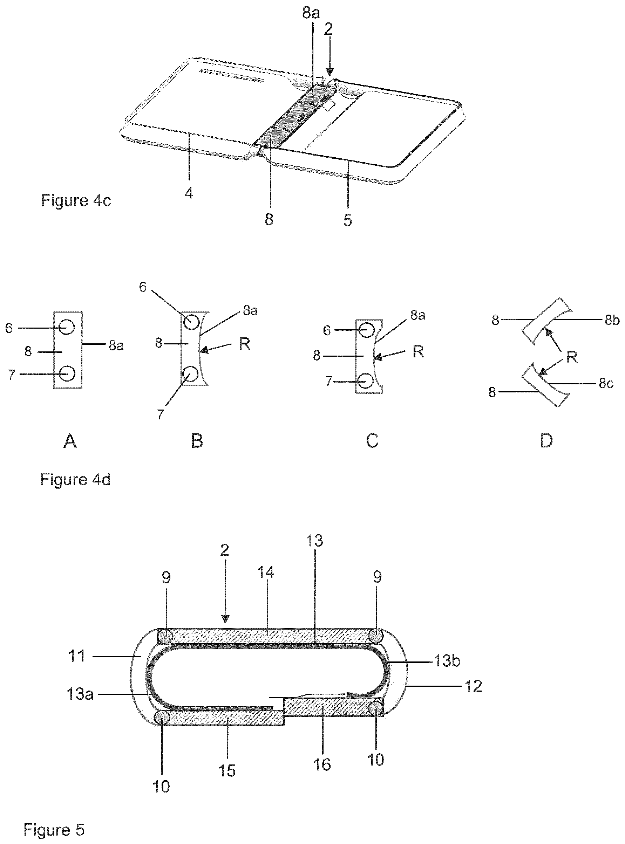

A display system 2 schematically shown in fig.4A and 4B and in perspective view (but without display) in fig.4C is a 'book' embodiment as described in applicant's non pre-published application number 61/506,177 of July 11, 2011. It comprises a flexible display 3 and a display support frame comprising two main display supports 4, 5. These supports are connected via hinges 6, 7 located in a hinge part and are each structurally configured to support a respective portion of the flexible display 3.

The hinge part is also working as an additional display support 8. The two main display supports 4, 5 are rotatable in the direction of arrows a, b between a configuration shown in fig.4A for fixing the flexible display in a planar configuration to a closed storage position shown in fig.4B. In the open position the gap created by the hinges 6, 7 between the main supports 4, 5 is closed for a major part by the display support 8 and substantially the whole surface of the display 3, including a display segment 3a in the area between the main supports 4, 5, is supported.

In the storage position of the flexible display 3 between the main display supports 4, 5 there is sufficient free space for enabling a partial curvature of the display segment 3a without conflicting with the respective main display supports. In this position the additional display support 8 constrains with its support surface 8a the display segment 3a in order to prevent a radius of the curvature which is too small. This is achieved by placing the additional display support 8 with its support surface 8a as a "bridge" behind the display. In closed position the bridge pushes against the display, facilitates the curvature of the display segment 3a with a predefined curvature, ensures during the lifetime of the display that the radius R over the whole area of the curvature is larger than the specified minimum radius R_{crit} and thus improves the lifetime of the display system. Preferably, the additional display support 8 facilitates a curvature of the unsupported display segment 3a with a radius along the display contour which is above, but close to the critical value R_{crit}. Since the radius is everywhere close to but above the critical value R_{crit}, the unsupported display segment 3a takes up close to the least possible amount of space.

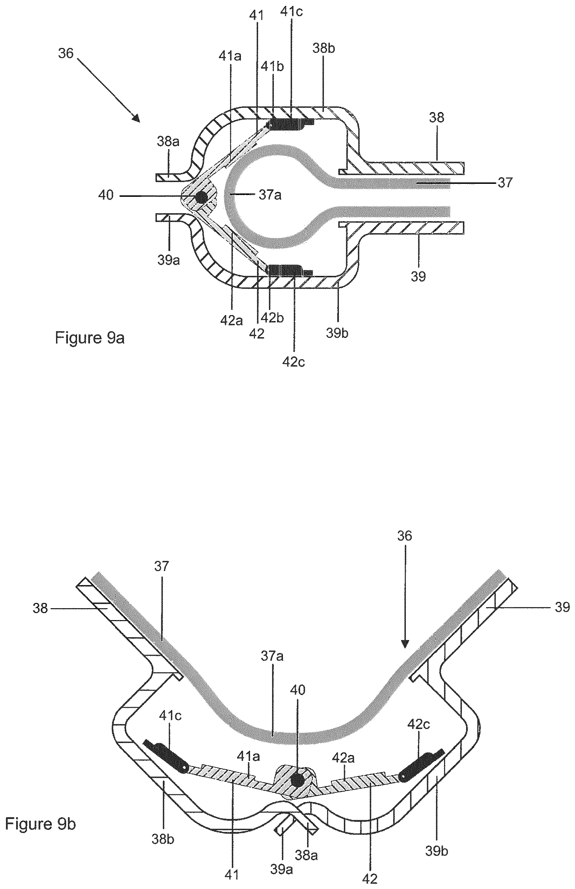

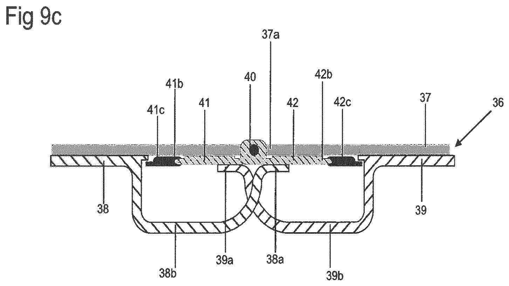

The additional display support 8 can have its support surface 8a over either the partial, the full width or with interruptions (seen in a lateral direction to fig. 4A, 4B) of the display 3. Over a part of the width may be useful if electrical connections have to be guided between the both 'book' parts. If an even better approach of the theoretical radius is preferred, instead of a flat support surface 8a (fig.4D-A), the additional display support 8 can also have a radius R over the support surface 8a, see fig.4D-B. In fig.4D-C is shown a combination of A and B with a radius R over a central part of the support surface 8a, neighboring flat side parts of the support surface 8a. Thus the support offers sufficient place for creating holes for the hinges 6, 7. In fig. 4D-D is shown an embodiment with a display support 8 comprising two mutually spaced parts having support surfaces 8b, 8c, respectively and both with a radius R, which parts are connected on a way not shown by hinges of the display system (for more details see the embodiment of fig.9).

In an experiment flexible displays were tested including an additional display support 8 for the prevention of having an ellipse shape in their display segment 3a. In these tests the displays did not have a buckle and therefore no damage to the display was caused either after some time (static storage) or after simulated dynamic lifetime experiments.

The embodiment shown in fig.5 is a 'wrap' embodiment of a display system 2 in accordance with the invention. In this embodiment two hinges 9, 10 are used for each hinge part 11, 12, connecting flat display supports 14, 15, 16 and acting as an additional display support. By means of the hinge parts display segments 13a, 13b of a display 13 the display segments will be constrained and will be prevented from having a very small Rₘᵢₙ as shown in fig.1B. The hinge parts ensure during the lifetime of the display that the radius R over the whole area of the curvature is larger than the specified minimum radius R_{crit}. Therefore damage to the display caused by buckling (see fig.3) will be prevented. It is noted that the described solution for preventing damage to the display can also be implemented for hinge parts with one or with more than two hinge shafts.

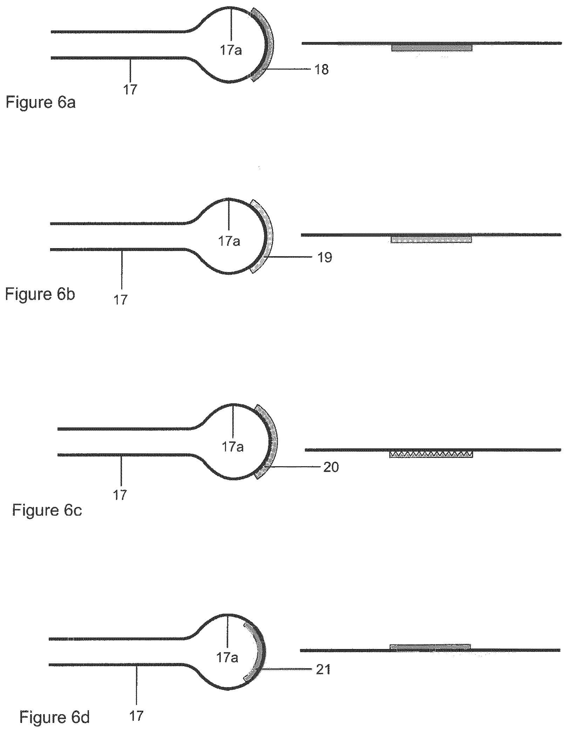

Fig. 6 shows schematically different ways of applying another type of additional display support in accordance with the invention in a 'book' or 'wrap' concept. In this solution an extra layer or component is, locally, adhered to the back of a display segment 17a of a display 17. As shown in fig. 6 there are three embodiments: solid flexible material 18 (fig.6A), 'self-locking' material 19 ("watch band", type fig.6B) and segmented component 20 (fig.6C). The 'self-locking' material and segmented component solution stimulates by its configuration that in the closed position the local curvature the radius R over the whole area of the curvature is larger than the specified minimum radius R_{crit}. This extra layer or component is adhered to a central area of the display segment 17a most at risk of taking on an ellipse-like shape when wrapping or folding. However the application area can also be extended to all parts of the display segment 17a that will undergo bending (either positive or negative).

In another embodiment of this solution as shown in fig.6D a component or material 21 can be applied on the front of the display segment 17a; either on the "inactive" areas of the display (borders) or on the front of the display if the material itself is transparent.

It is observed that a combination of an additional display support 8 of fig.4 or 11, 12 of fig.5 and the use of a display with an extra layer 18, 19, 20 or 21 of fig.6 is also part of the invention.

Both the 'wrap' and 'book' embodiments work with the additional display support on the principle of locally preventing the display of having a too small radius <R_{crit} at a particular location, shown in fig. 1b, 2b. This location is a point in the curved shape of the display segment (see fig. 5), or line in the width of the display (see figure 4b).

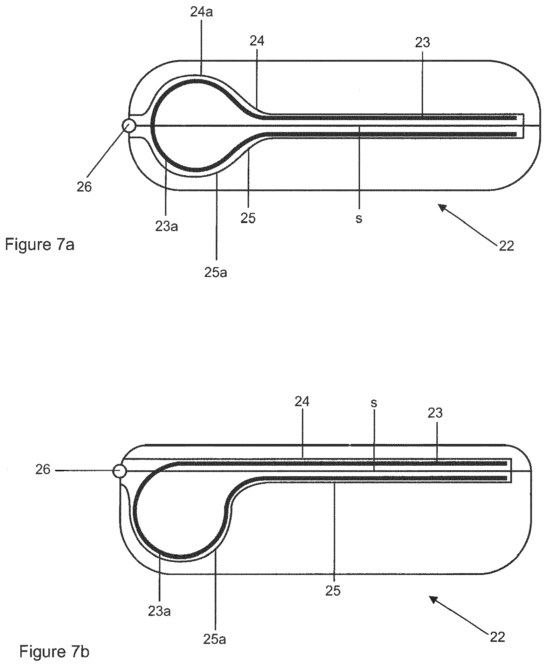

However it is also possible to fully constrain the display with the ideal closed shape of the display at the hinge area, see figure 7a, 7b for 'book' embodiments with such an ideal closed shape. The embodiment of fig 7A is a symmetrical version of such a 'book' type display system 22 in accordance with the invention with equally shaped housings of display support panels and in the storage position a display 23 with its display segment 23a symmetrically curved with respect to a plane s between display supports 24, 25 and their housings. These two display supports with their integral local curvature at the location of an additional display support 24a, 25a fully constrain the display segment 23a with the ideal closed shape of the display adjacent to the location of a hinge 26.

In fig.7B the display support housings have different dimensions measured perpendicular to the plane s between both display support housings. In the closed position the display segment 23a is curved only into the housing of the display support 25. Thus the support 25 with its integral local curvature at the location of an additional display support 25a fully constrains the display segment 23a with the ideal closed shape of the display adjacent to the location of a hinge 26. This solution can be applied in asymmetrical 'book' systems, in which the display segment 23a is asymmetrically curved with respect to the plane s between both display supports 24, 25 and their housings.

The embodiments of fig.7A, 7B allow the display 23 at the location of the display segment 23a to approach the theoretical radius Rₜ (see fig.2a) by providing the additional display supports 24a, 25a with an inner radius which approaches or equals the preferred theoretical radius.

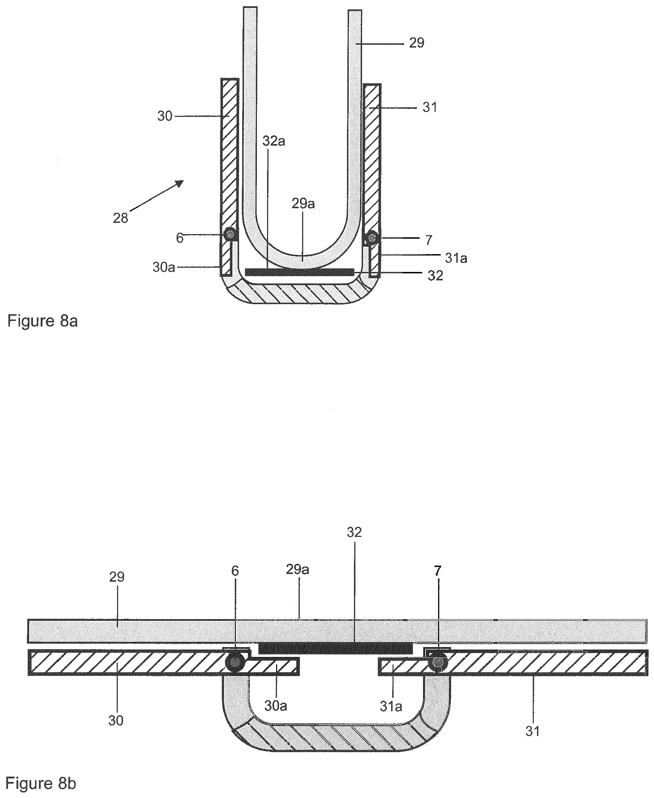

The embodiment shown in fig. 8 is a 'book' or 'wrap' display system 28 with a flexible display 29, a display segment 29a and main display supports 30, 31. These main supports are hingeable connected via hinges 6, 7 like the supports 4, 5 in the embodiment of fig.4. In this embodiment the additional display support comprises a support strip 32 which is connected to a central part of the display segment 29a and which working is comparable with the additional display support 8 of fig.4. The main display supports 30, 31 are provided with hooks 30a, 31a and push with the hooks during their movement from the storage position of fig.8A to the open position of fig.8B the support strip 32 with the display segment 29a to the flat position. In the open position the gap created by the hinge mechanism of hinges 6, 7 between the main supports 30, 31 is closed by the display support strip 32 and substantially the whole surface of the display is supported. In the closed position the support strip 32 facilitates by positioning its support surface 32a against the display segment 29a a predefined curvature of the display segment 29 in a way as described before for the embodiment of fig.4. ensuring that the radius R over the whole area of the curvature is larger than the specified minimum radius R_{crit}. Like the additional display support 8 the support strip 32 can have its support surface 32a over either the partial or the full width (lateral direction to fig. 8A, 8B) of the display 29. Instead of a flat support surface 32a (fig.4D-A), the support strip 32 can also have a radius R over the support surface 32a, like in fig.4D-B or in fig.4D-C.

In the embodiment shown in fig.9 a display system 36 with a display 37 has main display supports 38, 39 with housing parts 38b, 39b and extended parts 38a, 39a. Two flat panels 41, 42, rotatably connected around an axis 40, in fig.9A in the closed state shown inside the housing parts 38b, 39b, are configured as an additional display support. The flexible display 37 has free space between the housing parts 38b, 39b to form with its display segment 37a a predefined curvature, facilitated by support portions 41a, 42a of the panels 41, 42. These portions 41a, 42a are symmetrically arranged with respect to the curvature of the segment 37a and to a plane between the supports 38, 39 comprising the axis 40. By pivots 41b, 42b the panels 41, 42 are connected with panel parts 41c, 42c. For ensuring stable end positions this connection may be spring loaded. Upon opening the two main displays supports 38, 39 with the extended parts 38a, 39a push and support the supporting flat panels 41, 42 via the position as shown in fig.9B. towards the open position as shown in fig.9C. Between the two flat panels 41, 42 the angle of rotation can be limited so that in open state the panels 41, 42 and their parts 41c, 42c are parallel, therefore support the flexible display segment 37a in the region of the hinge mechanism and ensure that the radius R over the whole area of the curvature is larger than the specified minimum radius R_{crit}. Reference is made to fig. 4, especially the supports 8 in fig.4D-D, the support portions 41a, 42a have curved surfaces like the surfaces 8b, 8c.

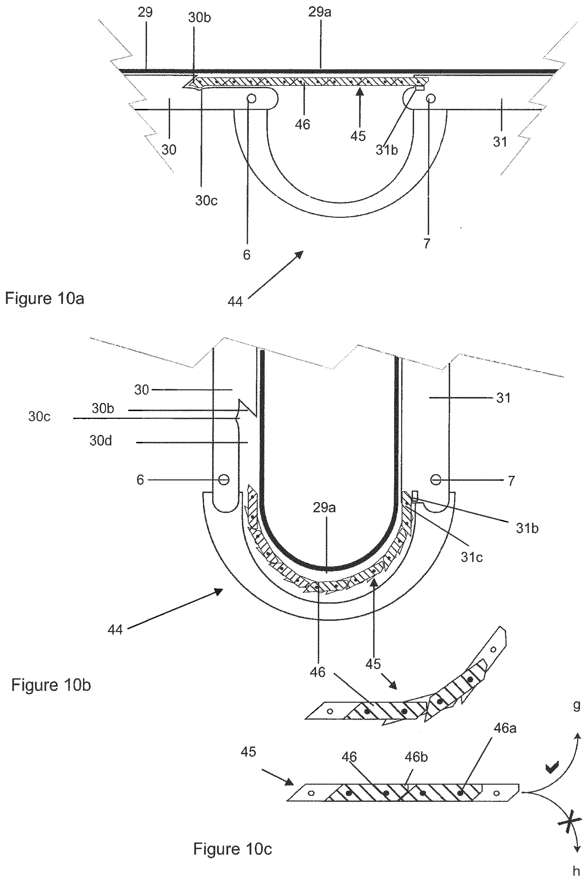

An alternative solution in a display system 44 for an additional display support 45 for the preceding 'book' or 'wrap' embodiments such as fig.8 is shown in fig. 10 in an open flat position (fig.10A) and in a storage position (fig. 10B), respectively. This solution uses a number of specially designed, by hinges 46a interlinked segments 46. An end segment 46 is coupled by a pivot 31c with the display support 31 and an abutment 31b limits the pivotal movement of this end segment. These segments are substantially parallelogram-shaped with one rounded corner 46b and are mutually configured such that when a segment 46 is locally bent to a radius, its interlinkage will make sure that other segments follow (see arrow g in fig.10C). The segments 46 ensure that the local radius R of the curvature of the display segment 29a along the display contour is larger than the specified minimum radius R_{crit}. The configuration and interlinkage of the segments prevent that a segment 46 is bent in the direction of the arrow h in fig.10C. During the movement from the position shown in fig.10B to the to the flat position shown in fig.10A all segments 46 are pushed flat by their configuration and interlinkage. A stable positioning towards the flat position of the segments is supported due to the length of the gap 30d between the display and the support 30. In addition, in the position shown in fig. 10B at the left side of the gap 30d an end segment 46 may be stable positioned in an optional hook shaped recess 30b in the support 30. Further in addition, in the area of the gap 30d an optional recess 30c in the support may be applied for extra stabilizing the flat position of the segments 46. Due to this stable positioning the flat position of the whole additional support 45 is ensured. In the flat position the combined segments 46 support substantially the whole surface of the display segment 2a in an effective way.

It is noted that in addition a spring (not shown) may be applied between the left side segment 46 and the support 30, urging the end segment 46 into the gap 30d towards its end position
The minimum achievable radius of the curvature will be determined by the positioning of the individual hinges 46a, the design of end stops near the corners of the segments and the distance between hinge points. This enables in the storage position a facilitation of the curvature of the display segment 29a with a predefined curvature, in this embodiment shown as a combination of circular arches.

A special advantage of the invention is the dual function of the additional display support, in the open position of the display system as a display touch support and in the closed position as a display curvature facilitator.

The detailed drawings, specific examples and particular formulations given, serve the purpose of illustration only. Furthermore, other substitutions, modifications, changes, and omissions may be made in the design, operating conditions, and arrangement of the exemplary embodiments without departing from the scope of the invention as expressed in the appended claims.

## Claims

1. A display system (2) comprising:
a continuous flexible display (3) ;
a support frame comprising two main display supports (4, 5) being hingeable with respect to each other and supporting a first portion of the flexible display and a second portion of the flexible display, and
at least one additional display support supporting a third portion of the flexible display being located between the first portion and the second portion in an open configuration and a closed configuration;
wherein the two main display supports are hingeable between the closed configuration for bending the flexible display and the open configuration for unbending the flexible display,
**characterized in that**
the at least one additional display support comprises two flat panels (41, 42), rotatably connected around an axis (40), wherein each flat panel (41, 42) comprises a support portion (41a, 42a),
wherein in the closed configuration, the third portion is supported by the support portions (41a, 42a) of the flat panels (41, 42), wherein the support portions (41a, 42a) of the flat panels (41, 42) are symmetrically arranged with respect to the curvature of the third portion and to a plane between the two main display supports (4, 5) comprising the axis (40),
wherein the support portions (41a, 42a) comprise a curved support surface so that when the two main display supports (4, 5) are positioned in the closed configuration, the additional display support facilitates to bend the third portion of the flexible display (3) with a predefined radius which is larger than the critical radius for the flexible display (3),
wherein in the open configuration, the two flat panels (41, 42) are parallel.

2. The display system (2) of claim 1, wherein in the closed configuration, the additional display support (41, 42) facilitates the forming of the curvature of the third portion in a circular arch.

3. The display system (2) of claim 1, wherein in the closed configuration, the additional display support (41, 42) facilitates a curvature of the unsupported the third portion with a radius along the display contour which is close to the critical radius.

4. The display system (2) of claim 1, wherein the support surface has a curvature with a radius which approaches or equals the predefined radius of the third portion.

5. The display system (2) of claim 1, wherein in the closed configuration, the at least one additional display support (41, 42) is positioned in a curved support configuration; in the open configuration, the at least one additional display support (41, 42) is positioned in a flat support configuration.

6. The display system (2) of claim 1, wherein the additional display support (41, 42) is provided at the location of the third portion, and has an inner radius which approaches or equals the predefined radius of the third portion.

7. The display system (2) of claim 1, wherein the additional display support (41, 42) is located both in the open configuration and closed configuration at the backside of the third portion, supporting the third portion as a touch support in the open configuration, and facilitating the curvature of the third portion with the predefined curvature in the closed configuration.

8. The display system (2) of claim 1, wherein in the closed configuration, the additional display support (41, 42) supports over the whole width of the third portion.

9. The display system (2) of claim 1, wherein in the closed configuration, the additional display support (41, 42) supports over a part of the width of the third portion.

## Patentansprüche

1. Anzeigesystem (2), umfassend:
eine kontinuierliche flexible Anzeige (3);
einen Trägerrahmen, der zwei Hauptanzeigeträger (4, 5) umfasst, die in Bezug aufeinander schwenkbar sind und einen ersten Abschnitt der flexiblen Anzeige und einen zweiten Abschnitt der flexiblen Anzeige tragen, und
mindestens einen zusätzlichen Anzeigeträger, der einen dritten Abschnitt der flexiblen Anzeige trägt, der sich in einer offenen Konfiguration und einer geschlossenen Konfiguration zwischen dem ersten Abschnitt und dem zweiten Abschnitt befindet;
wobei die zwei Hauptanzeigeträger zwischen der geschlossenen Konfiguration zum Biegen der flexiblen Anzeige und der offenen Konfiguration zum Geradebiegen der flexiblen Anzeige schwenkbar sind,
**dadurch gekennzeichnet, dass** der mindestens eine zusätzliche Anzeigeträger zwei flache Platten (41, 42) umfasst, die drehbar um eine Achse (40) verbunden sind, wobei jede flache Platte (41, 42) einen Trägerabschnitt (41a, 42a) umfasst, wobei der dritte Abschnitt in der geschlossenen Konfiguration von den Trägerabschnitten (41a, 42a) der flachen Platten (41, 42) getragen wird, wobei die Trägerabschnitte der flachen Platten (41, 42) in Bezug auf die Krümmung des dritten Abschnitts und auf einer Ebene zwischen den zwei Hauptanzeigeträgern (4, 5), welche die Achse (40) umfassen, symmetrisch angeordnet sind,
wobei die Trägerabschnitte (41a, 42a) eine gekrümmte Trägerfläche umfassen, sodass, wenn die zwei Hauptanzeigeträger (4, 5) in der geschlossenen Konfiguration positioniert sind, der zusätzliche Anzeigeträger es erleichtert, den dritten Abschnitt der flexiblen Anzeige (3) mit einem vordefinierten Radius zu biegen, der größer als der kritische Radius für die flexible Anzeige (3) ist, wobei die zwei flachen Platten (41, 42) in der offenen Konfiguration parallel sind.

2. Anzeigesystem (2) nach Anspruch 1, wobei der zusätzliche Anzeigeträger (41, 42) in der geschlossenen Konfiguration das Bilden der Krümmung des dritten Abschnitts in einem kreisförmigen Bogen erleichtert.

3. Anzeigesystem (2) nach Anspruch 1, wobei der zusätzliche Anzeigeträger (41, 42) in der geschlossenen Konfiguration eine Krümmung des nicht getragenen dritten Abschnitts mit einem Radius entlang der Anzeigekontur erleichtert, der nahe dem kritischen Radius liegt.

4. Anzeigesystem (2) nach Anspruch 1, wobei die Trägerfläche eine Krümmung mit einem Radius aufweist, der sich dem vordefinierten Radius des dritten Abschnitts nähert oder diesem entspricht.

5. Anzeigesystem (2) nach Anspruch 1, wobei der mindestens eine zusätzliche Anzeigeträger (41, 42) in der geschlossenen Konfiguration in einer gekrümmten Trägerkonfiguration positioniert ist; der mindestens eine zusätzliche Anzeigeträger (41, 42) in der offenen Konfiguration in einer flachen Trägerkonfiguration positioniert ist.

6. Anzeigesystem (2) nach Anspruch 1, wobei der zusätzliche Anzeigeträger (41, 42) an der Stelle des dritten Abschnitts bereitgestellt ist und einen Innenradius aufweist, der sich dem vordefinierten Radius des dritten Abschnitts nähert oder diesem entspricht.

7. Anzeigesystem (2) nach Anspruch 1, wobei sich der zusätzliche Anzeigeträger (41, 42) sowohl in der offenen Konfiguration als auch in der geschlossenen Konfiguration an der Rückseite des dritten Abschnitts befindet, den dritten Abschnitt als Berührungsträger in der offenen Konfiguration trägt und die Krümmung des dritten Abschnitts mit der vordefinierten Krümmung in der geschlossenen Konfiguration erleichtert.

8. Anzeigesystem (2) nach Anspruch 1, wobei der zusätzliche Anzeigeträger (41, 42) in der geschlossenen Konfiguration über die gesamte Breite des dritten Abschnitts trägt.

9. Anzeigesystem (2) nach Anspruch 1, wobei der zusätzliche Anzeigeträger (41, 42) in der geschlossenen Konfiguration über einen Teil der Breite des dritten Abschnitts trägt.

## Revendications

1. Système d'affichage (2) comprenant :
un affichage flexible continu (3) ;
un cadre de support comprenant deux supports d'affichage principaux (4, 5) pouvant être articulés l'un par rapport à l'autre et supportant une première portion de l'affichage flexible et une seconde portion de l'affichage flexible, et
au moins un support d'affichage supplémentaire supportant une troisième portion de l'affichage flexible étant situé entre la première portion et la deuxième portion dans une configuration ouverte et une configuration fermée ;
lesdits deux supports d'affichage principaux pouvant être articulés entre la configuration fermée pour plier l'affichage flexible et la configuration ouverte pour déplier l'affichage flexible,
**caractérisé en ce que**
ledit au moins un support d'affichage supplémentaire comprend deux panneaux plats (41, 42), raccordés de manière rotative autour d'un axe (40), chaque panneau plat (41, 42) comprenant une portion de support (41a, 42a),
dans la configuration fermée, ladite troisième portion étant supportée par les portions de support (41a, 42a) des panneaux plats (41, 42), lesdites portions de support des panneaux (41, 42) étant disposés symétriquement par rapport à la courbure de la troisième portion et à un plan entre les deux supports d'affichage principaux (4, 5) comprenant l'axe (40),
lesdites portions de support (41a, 42a) comprenant une surface de support incurvée de sorte que lorsque les deux supports d'affichage principaux (4, 5) sont positionnés dans la configuration fermée, le support d'affichage supplémentaires facilite le pliage de la troisième portion de l'affichage flexible (3) avec un rayon prédéfini qui est plus grand que le rayon critique pour l'affichage flexible (3),
dans la configuration ouverte, lesdits deux panneaux plats (41, 42) étant parallèles.

2. Système d'affichage (2) selon la revendication 1, dans la configuration fermée, ledit support d'affichage supplémentaire (41, 42) facilitant la formation de la courbure de la troisième portion dans une arche circulaire.

3. Système d'affichage (2) selon la revendication 1, dans la configuration fermée, ledit support d'affichage supplémentaire (41, 42) facilitant une courbure de la troisième portion non supportée avec un rayon le long du contour d'affichage qui est proche du rayon critique.

4. Système d'affichage (2) selon la revendication 1, ladite surface de support ayant une courbure avec un rayon qui s'approche ou est égal au rayon prédéfini de la troisième portion.

5. Système d'affichage (2) selon la revendication 1, dans la configuration fermée, ledit au moins un support d'affichage supplémentaires (41, 42) étant positionné dans une configuration de support incurvée ; dans la configuration ouverte, ledit au moins un support d'affichage supplémentaires (41, 42) étant positionné dans une configuration de support plat.

6. Système d'affichage (2) selon la revendication 1, ledit support d'affichage supplémentaire (41, 42) étant prévu à l'emplacement de la troisième portion, et ayant un rayon intérieur qui s'approche ou est égal au rayon prédéfini de la troisième portion.

7. Système d'affichage (2) selon la revendication 1, ledit support d'affichage supplémentaire (41, 42) étant situé à la fois dans la configuration ouverte et dans la configuration fermée à l'arrière de la troisième portion, supportant la troisième portion en tant que support tactile dans la configuration ouverte, et facilitant la courbure de la troisième portion avec la courbure prédéfinie dans la configuration fermée.

8. Système d'affichage (2) selon la revendication 1, dans la configuration fermée, ledit support d'affichage supplémentaire (41, 42) supportant sur toute la largeur de la troisième portion.

9. Système d'affichage (2) selon la revendication 1, dans la configuration fermée, ledit support d'affichage supplémentaire (41, 42) supportant sur une partie de la largeur de la troisième portion.
